Europäisches Patentamt

European Patent Office

Office européen des brevets

(11) Numéro de publication: **0 021 974**
**B1**

(12) **FASCICULE DE BREVET EUROPEEN**

(45) Date de publication du fascicule du brevet: **21.11.84**

(21) Numéro de dépôt: **80400875.3**

(22) Date de dépôt: **17.06.80**

(51) Int. Cl.³: **A 47 J 19/02, A 47 J 43/06**

(54) **Dispositif presse-agrumes pour robot de cuisine.**

(30) Priorité: **18.06.79 FR 7915502**

(43) Date de publication de la demande:
**07.01.81 Bulletin 81/01**

(45) Mention de la délivrance du brevet:
**21.11.84 Bulletin 84/47**

(84) Etats contractants désignés:
**AT BE CH DE GB IT LI LU NL SE**

(56) Documents cités:
**DE-B-1 187 349**
**FR-A-1 542 213**
**US-A-4 113 188**

(73) Titulaire: **ROBOT-COUPE**
**82-84 Boulevard des Batignolles**
**F-75017 Paris (FR)**

(72) Inventeur: **Coggiola, Marcel**
**32 Avenue du Général de Gaulle**
**Le Perreux Val-de-Marne (FR)**

(74) Mandataire: **Viard, Jean**
**Cabinet VIARD 28 bis, avenue Mozart**
**F-75016 Paris (FR)**

Courier Press, Leamington Spa, England.

EP 0 021 974 B1

## Description

La présente invention a pour objet un dispositif presse-agrumes destiné à être monté sur un appareil dit robot de cuisine qui, par fixation d'outils divers tels que couteaux, disques éminceurs, etc. sur l'arbre d'un moteur électrique permet de réaliser des préparations culinaires variées.

Les presse-agrumes à entraînement par moteur électrique sont connus et un presse-fruits de ce type est décrit dans le brevet FR—A—1.542.213. Dans ce brevet, le moteur électrique entraîne un cône monté à l'intérieur d'un panier dont le fond est percé afin de permettre la séparation de la pulpe et du jus de fruit, le panier lui-même étant monté sur un bol ou récipient. Le fond du panier présente une jupe centrale percée d'un orifice qui permet le passage de l'arbre moteur et d'un moyeu d'entraînement du cône, ce montage étant destiné à assurer l'étanchéité du bloc moteur.

On connaît par ailleurs par le brevet FR—A—2.147.361 un robot de cuisine comportant un bloc moteur sur lequel est assujetti un bol.

Un premier objet de la présente invention est la réalisation d'un dispositif presse-agrumes pouvant être monté sur un robot de cuisine.

Un second objet de la présente invention est la réalisation d'un presse-agrumes qui présente un maximum de sécurité et dans lequel il est impossible de procéder à des opérations de montage ou de démontage du cône lorsqu'il est entraîné en rotation. En effet, contrairement aux moteurs utilisés dans les presse-fruits de la technique antérieure, les moteurs employés dans les robots de cuisine peuvent tourner jusqu'à plusieurs milliers de tours par minute ce qui représente un danger certain pour l'utilisateur.

Selon la présente invention, le dispositif presse-agrumes pour robot de cuisine, comportant un panier dont le fond présente des orifices d'écoulement, un cône de pressage monté amovible à l'intérieur du panier, ce cône de pressage étant solidaire d'un moyeu qui pénètre à l'intérieur d'une jupe formée au centre du fond du panier est caractérisé en ce que pour son adaptation sur un robot de cuisine comprenant un moteur électrique dont l'arbre pénètre à l'intérieur d'un bol assujetti sur le carter du moteur électrique, le cône de pressage est rendu solidaire de l'arbre par un prolongateur comportant à sa partie inférieure un manchon entourant l'arbre et terminé à sa partie supérieure par des dents hélicoïdales coopérant avec des cavités formées à l'intérieur du cône de pressage et en ce que le panier porte des moyens de verrouillage sur le bol susceptibles d'agir sur un contacteur du moteur électrique.

Sur les dessins annexés, représentant un mode particulier de réalisation,

— la Fig. 1 est une vue éclatée du dispositif;

— la Fig. 2 est un schéma de montage du presse-agrumes sur un robot de cuisine du type décrit dans le brevet FR—A—2.147.361;

— la Fig. 3 est une vue en coupe du presse-agrumes monté;

— la Fig. 4 est un schéma montrant l'éjection du cône.

Bien entendu, l'invention n'est pas limitée à l'emploi avec un type particulier de robot et le dispositif peut être monté sur d'autres robots de cuisine moyennant les adaptations nécessaires.

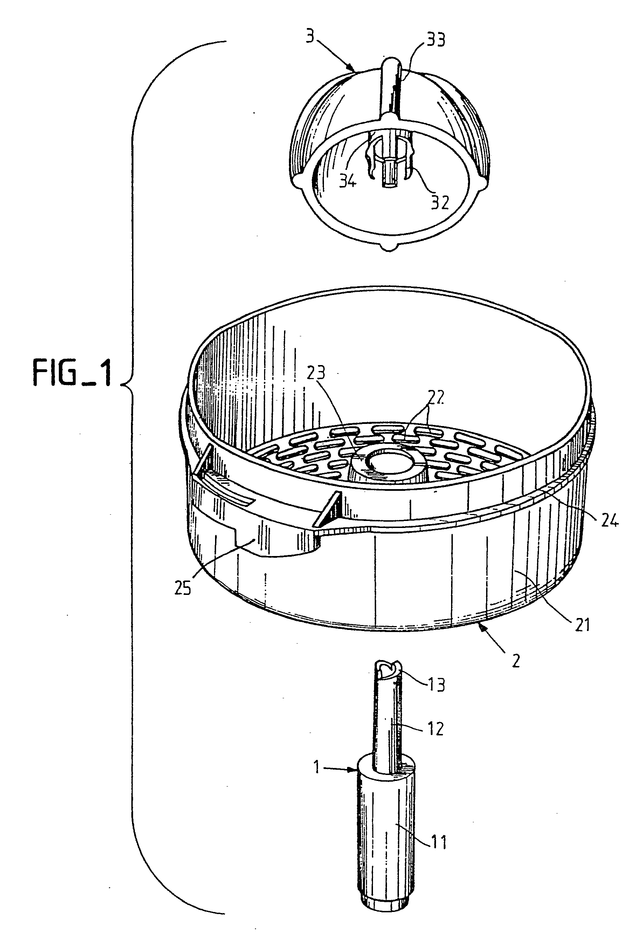

Sur la Fig. 1, on voit que le dispositif comprend trois pièces: un prolongateur 1, un panier presse-fruits 2 et un cône 3. Dans la pratique et compte tenu des différentes tailles d'agrumes, il est nécessaire de disposer d'au moins deux cônes, l'un servant par exemple à presser les citrons et l'autre les oranges ou les pamplemousses.

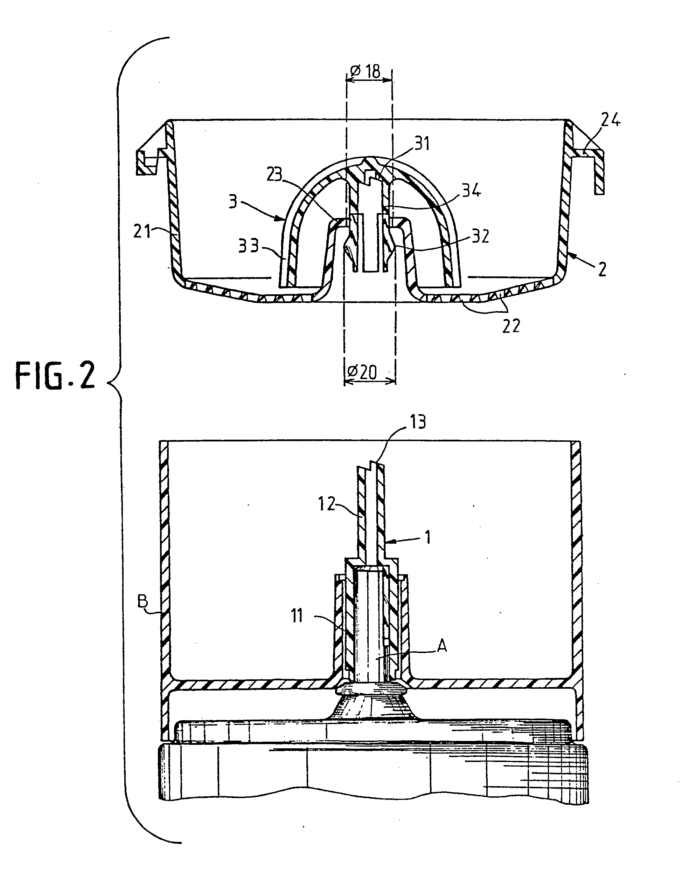

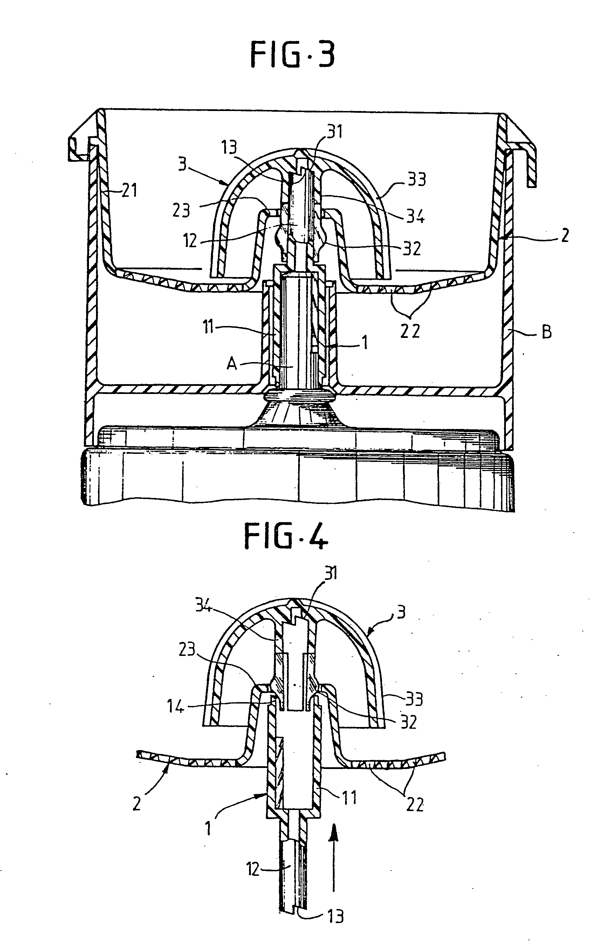

La structure du prolongateur apparaît plus clairement sur les coupes des figures 2 et 3. Il comprend un manchon 11 susceptible de venir entourer l'arbre moteur A et d'être entraîné par ce dernier par l'intermédiaire d'un méplat par exemple. Le manchon 11 est prolongé par un axe 12 présentant à sa partie supérieure des dents 13 venant engrener avec une partie correspondante 31 du cône par des rampes hélicoïdales.

Le panier 2 se compose d'une cuve 21 en makrolon par exemple percée à sa partie inférieure d'orifices 22 dont le but est de séparer le jus de la pulpe du fruit. La cuve 21 présente d'autre part dans sa partie inférieure centrale une jupe creuse 23 dont le but est de permettre le passage du manchon 11 d'une part et le passage de pattes élastiques 32 formées à l'intérieur du cône d'autre part. Le panier 2 présente sur sa périphérie extérieure une couronne 24 destinée à permettre la pose du presse-fruits sur le bol B du robot. La couronne 24 porte d'une part des pattes permettant une fermeture à baïonnette du panier sur le bol B et d'autre part un sabot latéral 25 formant came et susceptible d'agir sur l'extrémité supérieure d'un poussoir agissant sur un contacteur pour la mise en route du moteur. Le cône 3 a une forme extérieure semblable à celle des cônes utilisés pour presser les agrumes, c'est-à-dire qu'il est sensiblement hémisphérique et présente à sa partie supérieure des arêtes méridiennes 33. Le centre du cône est creux et présente dans sa partie centrale un moyeu 34 destiné à venir s'enfiler sur la partie 12 du prolongateur 1.

Comme il a été vu précédemment, le panier porte des moyens permettant d'assurer la mise en marche de l'appareil. Le prolongateur monté sur l'arbre A transmet le mouvement de celui-ci à l'intérieur du panier qui est ouvert. Il y a donc un risque d'accident si l'utilisateur veut monter un cône alors que l'appareil est en cours de fonctionnement. Selon une des caractéristiques de l'invention, les dimensions respectives de l'arbre 12, de la jupe 23, et des pattes élastiques 32 sont choisies de telle sorte qu'un cône ne puisse être monté sur l'arbre que lorsque les pattes élastiques 32 ont été préalablement introduites à l'intérieur de la jupe 23. Dans ces conditions, un cône doit toujours être monté par encliquetage sur le panier avant de mettre ledit panier en place sur le bol. En fait, le diamètre extérieur des pattes élastiques 32 est légèrement supérieur au diamètre intérieur de l'orifice de la jupe 23.

La figure 2 représente le mode de montage du presse-agrumes sur un robot de cuisine, c'est-à-dire que, dans un premier temps, le prolongateur 1 est monté sur l'axe monteur A, un cône 3 étant parallèlement encliqueté sur le panier 2. Par exemple, le diamètre de l'orifice de la jupe 23 peut être de 18 mm alors que le diamètre extérieur des pattes élastiques 32 est de 20 mm. Puis, la cuve est assujettie sur le bol B, état représenté sur la figure 3, et l'appareil peut être mis en route par rotation du panier sur le bol.

La figure 4 représente l'extraction d'un cône 3 hors du panier 2. La cuve étant séparée du bol, le prolongateur 1 est retiré de l'axe moteur 1 et est retourné. Il présente à son extrémité inférieure 14 un évasement qui, par introduction sur les pattes 32 rapproche celles-ci du centre et permet de désencliqueter le cône.

## Revendications

1. Dispositif presse-agrumes pour robot de cuisine, comportant un panier (2) dont le fond présente des orifices (22) d'écoulement, un cône de pressage (3) monté amovible à l'intérieur de panier (2), le cône de pressage (3) étant solidaire d'un moyeu (34) qui pénètre à l'intérieur d'une jupe (23) formée au centre du fond du panier (2), caractérisé en ce que pour son adaptation sur un robot de cuisine comprenant un moteur électrique dont l'arbre (A) pénètre à l'intérieur d'un bol (B) assujetti sur le carter du moteur électrique, le cône de pressage (3) est rendu solidaire de l'arbre (A) par un prolongateur (1) comportant à sa partie inférieure un manchon (11) entourant l'arbre (A) et terminé à sa partie supérieure par des dents (13) hélicoïdales coopérant avec des cavités (31) formées à l'intérieur du cône de pressage (3) et en ce que le panier (2) porte des moyens (24, 25) de verrouillage sur le bol (B) susceptibles d'agir sur un contacteur du moteur électrique.

2. Dispositif selon la revendication 1 caractérisé en ce que la jupe (23) est percée d'un orifice de passage du prolongateur (1) dont le diamètre est légèrement supérieur au diamètre du prolongateur (1), le cône de pressage (3) étant monté sur le panier (2) par l'intermédiaire de pattes élastiques (32) pénétrant dans la jupe (23), le diamètre de l'enveloppe extérieure des pattes élastiques (32) étant supérieur au diamètre du l'orifice de la jupe (23).

3. Dispositif selon la revendication 2 caractérisé en ce que la partie inférieure (11) du prolongateur (1) présente un évasement (14) permettant l'introduction des extrémités inférieures des pattes élastiques (32) pour permettre l'extraction des pattes élastiques (32) hors du panier (2).

## Patentansprüche

1. Für Küchenmaschinen bestimmte Zitruspreßvorrichtung, die einen im Boden mit Abflußöffnungen (22) versehenen Korb (2) und einen im Inneren des Korbes (2) abnehmbar montierten Preßkonus (3) aufweist, der mit einer Nabe (34) fest verbunden ist, die in das Innere eines im Zentrum des Bodens des Korbes (2) gebildeten Ringes (23) reicht, dadurch gekennzeichnet, daß zu ihrer Adaption an eine Küchenmaschine mit Elektromotor, dessen Welle (A) in das Innere eines Gefäßes (B) reicht, das mit dem Gehäuse des Elektromotors verbunden ist, der Preßkonus (3) mit der Welle (A) durch einen Ansatz (1) verbunden ist, der an seinem unteren Teil eine die Welle (A) umgebende Manschette (11) aufweist und an seinem oberen Teil in schraubenförmigen Zähnen (13) endet, die mit Ausnehmungen (31) zusammenwirken, die im Inneren des Preßkonus (3) vorgesehen sind, und daß der Korb (2) Mittel (24, 25) zur Verschraubung mit dem Gefäß (B) aufweist, die imstande sind, auf einen Schalter des Elektromotors einzuwirken.

2. Vorrichtung nach Anspruch 1, dadurch gekennzeichnet, daß der Ring (23) von einer Durchgangsöffnung für den Ansatz (1) durchsetzt ist, deren Durchmesser geringfügig größer als der Durchmesser des Ansatzes (1) ist, wobei der Preßkonus (3) auf dem Korb (2) mit Hilfe elastischer Füßchen (32) montiert ist, die in den Ring (23) eindringen, und der Durchmesser der äußeren Umhüllenden der elastischen Füßchen (32) größer ist als der Durchmesser der Öffnung des Ringes (23).

3. Vorrichtung nach Anspruch 2, dadurch gekennzeichnet, daß der untere Teil (11) des Ansatzes (1) eine Ausnehmung (14) aufweist, die das Einführen der unteren Enden der elastischen Füßchen (32) gestattet, um ein Herausnehmen der elastischen Füßchen (32) aus dem Korb zu ermöglichen.

## Claims

1. A citrus fruit press for a kitchen appliance, comprising a basket (2) having a base with flow orifices (22), and a pressing cone (3) removably mounted inside the basket (2), the pressing cone (3) being fixed to a hub (34) which penetrates inside a skirt (23) formed in the middle of the base of the basket (2), characterized in that for fitting to a food processor having an electric motor with a shaft (A) that penetrates into a bowl (B) fastened to the housing of the electric motor, the pressing cone (3) is fixed to the shaft (A) by an extender (1) comprising a sleeve (11) at its bottom end surrounding the shaft (A) and terminated at its top end by helical teeth (13) which co-operate with cavities (31) formed inside the pressing cone (3), and in that the basket (2) carries means (24, 25) for locking to the bowl (B) and suitable for acting on a switch for the electric motor.

2. A fruit press according to claim 1, characterized in that the skirt (23) is pierced by an extender-passing orifice of slightly larger diameter than the diameter of the extender (1), the pressing cone (3) being mounted in the basket (2) by means of resilient tabs (32) which penetrate into the skirt (23), the diameter of the envelope circumscribing the resilient tabs (32) being greater than the diameter of the orifice in the skirt.

3. A fruit press according to claim 2, characterized in that the bottom end (11) of the extender (1) has a hollow (14) into which the bottom ends of the resilient tabs (32) may be inserted to enable the resilient tabs (32) to be extracted from the basket (2).

**0021974**

FIG_1

FIG.2

# FIG·3

# FIG·4